# EUROPEAN PATENT APPLICATION

(11) **EP 2 947 567 A1**
(43) Date of publication of application: **25.11.2015**
(21) Application number: 15168629.2
(22) Date of filing: 21.05.2015
(51) Int. Cl.: G06F 9/44

(54) **USER INTERFACE TEXT APPEARANCE CUSTOMIZATION**

(30) Priority: 21.05.2014 CN 201410216429
(71) Applicant: Xiaomi Inc., Beijing 100085 (CN)
(72) Inventor: Dong, Junjie, Haidian District Beijing 100085 (CN); Zheng, Xingping, Haidian District Beijing 100085 (CN)
(74) Representative: Sadler, Peter Frederick

(57) **Abstract**

The present disclosure generally relates to a label creation method and device and terminal, pertaining to the field of computer technology. The method includes: receiving a label creation request, which carries label content and an identification of a visual theme of an application, and the visual theme identification being an identification of a visual theme currently used in the application; reading label attribute information from visual theme information as indicated in the visual theme identification; determining a label style as defined in the visual theme according to the label attribute information; and creating a label comprising the label content in a label bar according to the label style. The device comprises: a request receiving module, an information reading module, a style determination module and a label creation module. The present disclosure solves the problem that a fixed label style is unadaptable to demands for change of a visual theme of an application thus leading to disunity between a label style and a visual theme style, thereby reaching an effect of unifying the label style and the visual theme style.

## Description

### TECHNICAL FIELD

The present disclosure generally relates to the field of computer technology, and more particularly, to a label creation method, device and terminal.

### BACKGROUND

In recent years, personalization of a terminal has become an increasing concern and is a welcome feature for users, among which a visual theme of an application is the most important part. However, methods for providing personalized customization of color, picture, character and the like on an application interface by means of a visual theme have been unable to meet users' personalized needs, because users pose personalized customization demands at a deeper level for elements in the application interface.

A label is an element in an application interface. A terminal may create a label with the following process: the terminal receives a label creation request, reads preset label style information, which indicates that a width of the label is acquired by calculation based on the rule of equal division of a width of a label bar, from a system, and then creates a label with a width as defined in the label style information in the label bar.

In the process of realization of the present disclosure, at least disadvantages as below are found in related technologies:

Label style information provided by a system is fixed, and labels created by any application in a terminal according to the label style information have identical styles, unadaptable to demands for change of a visual theme of an application, thus leading to disunity between a label style and a visual theme style.

### SUMMARY

The present disclosure provides a label creation method, device and terminal so as to solve the problem that a fixed label style is unadaptable to demands for change of a visual theme of an application thus leading to disunity between a label style and a visual theme style. A visual theme is a template for user interface resources that specifies the visual appearance of an application's user interface by specifying elements of the user interface and their properties. The elements of the user interface include one or more of labels, menus, pictures, characters, backgrounds and icons used in the application. The properties of the elements include one or more of the layout or location of the elements and their colouring and shading etc. A visual theme may be identified by particular identification information.

According to the first aspect of the embodiments of the present disclosure, a label creation method is provided, comprising:
receiving a label creation request, which carries label content and an identification of a visual theme of an application, and the visual theme identification being an identification of the visual theme currently used in the application;
reading label attribute information from visual theme information as indicated in the visual theme identification;
determining a label style as defined in the visual theme according to the label attribute information; and
creating a label comprising the label content in a label bar according to the label style.

Optionally, the reading label attribute information from visual theme information as indicated in the visual theme identification comprises:

searching for visual theme information as indicated in the visual theme identification from at least one visual theme information prestored in the application; and

reading the label attribute information from the visual theme information found, the label attribute information comprising a rule for determining a width of the label and an arrangement mode of the label in the label bar.

Optionally, the width determination rule is either one of determining a label width according to a width occupied by a label content or determining a preset width as the label width, and the arrangement mode is one of a left-aligned arrangement mode, a right-aligned arrangement mode and a center-aligned arrangement mode; or

the width determination rule is determining a maximum available width of a label bar as a label width, and the arrangement mode is a dispersive arrangement mode.

Optionally, the determining a label style as defined in the visual theme according to the label attribute information comprises:
calculating the label width according to the label content if in the width determination rule the label width is determined according to the width occupied by the label content; and
determining the label style according to the label width and the arrangement mode.

Optionally, the calculating the label width according to the label content comprises:
calculating a content width occupied by the label content; and
determining the content width as the label width; or detecting whether the content width is greater than a preset minimum width and smaller than a preset maximum width, determining the content width as the label width if the content width is greater than the minimum width and smaller than the maximum width, and determining the minimum width or the maximum width as the label width if the content width is smaller than the minimum width or greater than the maximum width.

Optionally, the determining the minimum width or the maximum width as the label width comprises:
comparing an absolute value of a first difference value with an absolute value of a second difference value, the first difference being acquired by subtracting the content width from the minimum width, while the second difference being acquired by subtracting the content width from the maximum width;
determining the maximum width as the label width if the absolute value of the first difference value is greater than the absolute value of the second difference value; and
determining the minimum width as the label width if the absolute value of the first difference value is smaller than the absolute value of the second difference value.

Optionally, the determining a label style as defined in the visual theme according to the label attribute information comprises:
determining a width acquired by equally division of the length of a label bar comprising the label being created and at least a label in the label bar as the label width if according to the width determination rule the maximum available width of a label bar is determined as a label width; and
determining the label style according to the label width and the arrangement mode.

According to the second aspect of the embodiments of the present disclosure, a label creation device is provided, comprising:
a request receiving module, configured to receive a label creation request, which carries label content and an identification of a visual theme of an application, and the visual theme identification being an identification of the visual theme currently used in the application;
an information reading module, configured to read label attribute information from visual theme information as indicated in the visual theme identification;
a style determination module, configured to determine a label style as defined in the visual theme according to the label attribute information read by the information reading module; and
a label creation module, configured to create a label comprising the label content in a label bar according to the label style determined by the style determination module.

Optionally, the information reading module comprises:
an information search module, configured to search for visual theme information as indicated in the visual theme identification from at least one visual theme information prestored in the application; and
an information reading module, configured to read the label attribute information from the visual theme information found by the information search module, the label attribute information comprising a rule for determining a width of the label and an arrangement mode of the label in the label bar.

Optionally, the width determination rule is either one of determining a label width according to a width occupied by a label content or determining a preset width as the label width, and the arrangement mode is one of a left-aligned arrangement mode, a right-aligned arrangement mode and a center-aligned arrangement mode; or
the width determination rule determines the maximum available width of a label bar as a label width, and the arrangement mode is a dispersive arrangement mode.

Optionally, the style determination module comprises:
a width calculation module, configured to calculate the label width according to the label content if according to the width determination rule the label width is determined according to the width occupied by a label content; and
a first determination module, configured to determine the label style according to the label width calculated by the width calculation module and the arrangement mode.

Optionally, the width calculation module comprises:
a width calculation submodule, configured to calculate a content width occupied by the label content; and
a width determination submodule, configured to determine the content width calculated by the width calculation submodule as the label width; or detect whether the content width calculated by the width calculation submodule is greater than a preset minimum width and smaller than a preset maximum width, determine the content width as the label width if the content width is greater than the minimum width and smaller than the maximum width, and determine the minimum width or the maximum width as the label width if the content width is smaller than the minimum width or greater than the maximum width.

Optionally, the width determination submodule is configured to compare the absolute value of a first difference value with the absolute value of a second difference value, the first difference is acquired by subtracting the content width from the minimum width, while the second difference is acquired by subtracting the content width from the maximum width; determine the maximum width as the label width if the absolute value of the first difference value is greater than the absolute value of the second difference value; and determine the minimum width as the label width if the absolute value of the first difference value is smaller than the absolute value of the second difference value.

Optionally, the style determination module comprises:
a width determination module, configured to determine a bisection width (acquired by bisecting the length of a label bar comprising the label being created and at least a label in the label bar) as the label width if according to the width determination rule the maximum available width of a label bar is determined as a label width; and
a second determination module, configured to determine the label style according to the label width determined by the width determination module and to the arrangement mode.

According to the third aspect of the embodiments of the present disclosure, a terminal is provided, comprising:
a processor;
a memory configured to store executable instructions from the processor;
wherein, the processor is configured to:
receive a label creation request, which carries label content and an identification of a visual theme of an application, and the visual theme identification is an identification of the visual theme currently used in the application;
read label attribute information from visual theme information as indicated in the visual theme identification;
determine a label style as defined in the visual theme according to the label attribute information; and
create a label comprising the label content in a label bar according to the label style.

The technical scheme according to embodiments of the disclosure may have the following beneficial effects:

By receiving a label creation request, which carries label content and an identification of a visual theme of an application, and the visual theme identification being an identification of the visual theme currently used in the application, reading label attribute information from visual theme information as indicated in the visual theme identification; determining a label style as defined in the visual theme according to the label attribute information, creating a label comprising the label content in a label bar according to the label style, it is possible to define different label styles according to different visual theme styles so as to unify label styles and visual theme styles. It is solved that a fixed label style is unadaptable to demands for change of a visual theme of an application thus leading to disunity between a label style and a visual theme style, thus having the effect of unifying label styles and visual theme styles.

It will be appreciated that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a label creation method according to an exemplary embodiment.
Fig. 2A is a flow chart showing a label creation method according to another exemplary embodiment.
Fig. 2B is a schematic diagram showing a first label bar according to the embodiment.
Fig. 2C is a schematic diagram showing a second label bar according to the embodiment.
Fig. 2D is a schematic diagram showing a third label bar according to the embodiment.
Fig. 2E is a schematic diagram showing a fourth label bar according to the embodiment.
Fig. 3 is a block diagram showing a label creation device according to an exemplary embodiment.
Fig. 4 is a block diagram showing a label creation device according to an exemplary embodiment.
Fig. 5 is a block diagram for a label creation device according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

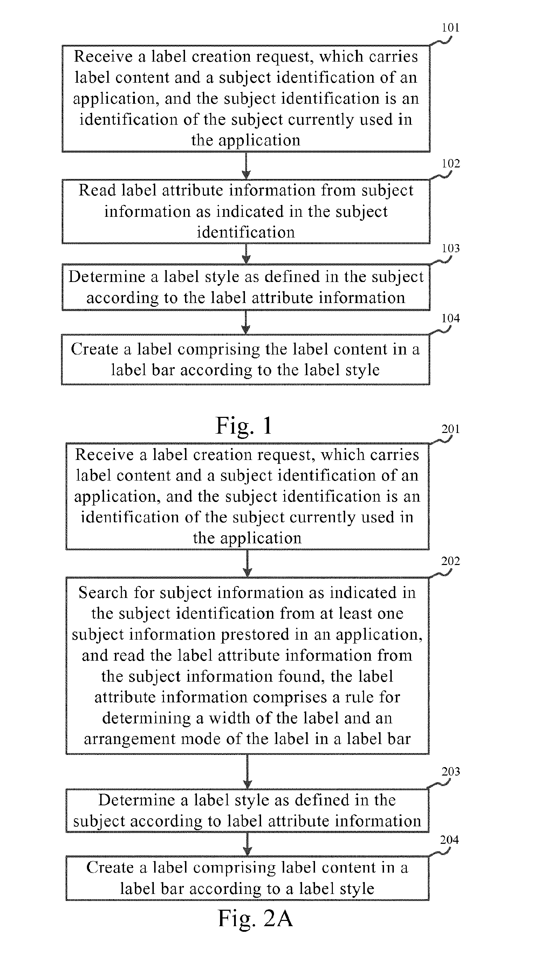

Fig. 1 is a flow chart showing a label creation method according to an exemplary embodiment. As shown in Fig.1, the label creation method is applied to a terminal, comprising the following steps:

In Step 101, a label creation request is received, which carries label content and an identification of a visual theme of an application, and the visual theme identification is an identification of the visual theme currently used in the application.

A label is configured to identify an application interface of an application, and label content is configured to indicate content of the application interface. Application interfaces may provide different screens, tabs or views within an application UI, each offering different information, functionalities or options to a user.

A visual theme identification of an application is configured to identify the visual theme currently used in the application.

In Step 102, label attribute information is read from visual theme information as indicated in the visual theme identification.

In order to unify the label style created and the visual theme style of an application, developers may preset a label style according to the visual theme style of a visual theme, label attribute information for defining the label style is added into visual theme information, and the label attribute information is read from the visual theme information of the visual theme after the visual theme currently used is determined by the terminal according to the visual theme identification carried in a label creation request.

In Step 103, a label style as defined in the visual theme is determined according to the label attribute information.

The label style is determined by the terminal according to parameters as defined in the label attribute information.

In Step 104, a label comprising the label content is created in the label bar according to the label style.

The terminal creates a label in the label bar according to the label style determined and adds the label content carried in the label creation request into the label created.

In conclusion, in the label creation method according to the present disclosure, by receiving a label creation request, which carries label content and an identification of a visual theme of an application, and the visual theme identification being an identification of the visual theme currently used in the application, reading label attribute information from visual theme information as indicated in the visual theme identification; determining a label style as defined in the visual theme according to the label attribute information, creating a label comprising the label content in a label bar according to the label style, it is possible to define different label styles according to different visual theme styles so as to unify label styles and visual theme styles. It is solved that a fixed label style is unadaptable to demands for change of a visual theme of an application thus leading to disunity between a label style and a visual theme style, thus having the effect of unifying label styles and visual theme styles.

Fig. 2A is a flow chart showing a label creation method according to another exemplary embodiment As shown in Fig.2A, the label creation method is applied to a terminal, comprising following steps:

In Step 201, a label creation request is received, which carries label content and an identification of a visual theme of an application, and the visual theme identification is an identification of the visual theme currently used in the application.

A label is configured to identify an application interface of an application, and label content is configured to indicate content of the application interface. Application interfaces may provide different screens, tabs or views within an application UI, each offering different information, functionalities or options to a user. For example, an application comprises two application interfaces, one of which comprises other applications recommended in the application, while the other one comprises short messages stored in the application. The terminal may create two labels for both of the application interfaces, set the label content of the first application interface as the recommended application, and set the label content of the second application interface as the short messages.

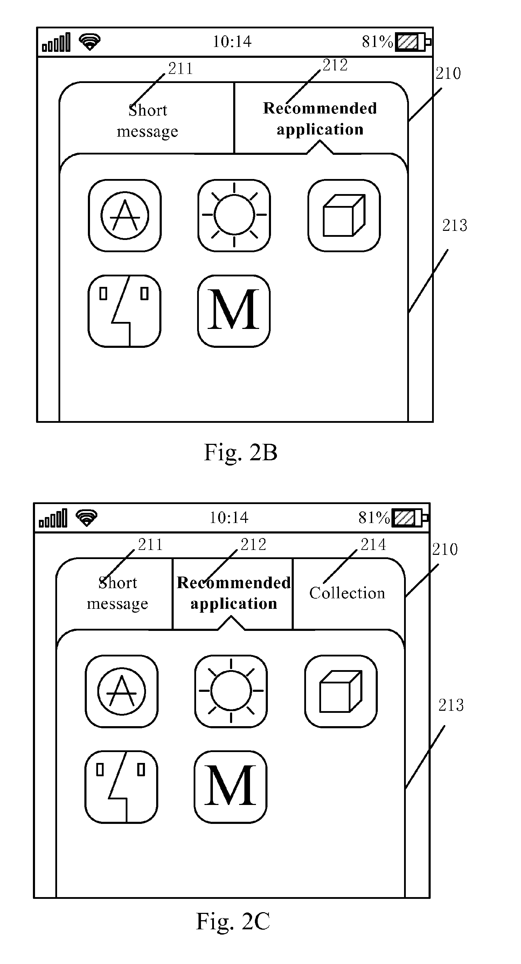

Please see the schematic diagram of the first label bar as shown in Fig.2B, in which the label bar 210 of an application comprises a label 211 and another label 212, wherein the label content of the label 211 is "short message", while the label content of the label 212 is "recommended application". An application interface 213 corresponding to the label 212 is shown if a user clicks the label 212, and the application interface 213 shows icons of five applications recommended in the application.

A visual theme identification of an application is configured to identify the visual theme currently used in the application.

A label creation request may be sent out either after or before the terminal adds content into a newly created application interface. The embodiment makes no restriction on the time for sending a label creation request.

In Step 202, visual theme information as indicated in the visual theme identification is searched for from at least one visual theme information prestored in an application, and the label attribute information is read from the visual theme information found, the label attribute information comprises a rule for determining a width of the label and an arrangement mode of the label in a label bar.

In order to unify the label style of a label and the visual theme style of an application, developers may preset a label style according to the visual theme style of a visual theme, and add label attribute information for defining the label style into visual theme information. After the visual theme identification of the visual theme used currently is read by the terminal from a label creation request, the visual theme information as indicated in the visual theme identification is searched for in at least one visual theme information included in the application, and the label attribute information is read from the visual theme information.

Generally, a label style includes label width, arrangement mode, font, font size, font color and background color, etc. Font, font size, font color and background color are defined in a visual theme. Therefore, a label style in the embodiment includes label width and an arrangement mode of a label in a label bar, and label attribute information in the embodiment includes a rule for determining the label width and an arrangement mode of a label in a label bar.

Wherein, the width determination rule is either one of determining a label width according to a width occupied by a label content or of determining a preset width as the label width, and the arrangement mode is one of a left-aligned arrangement mode, a right-aligned arrangement mode and a center-aligned arrangement mode; or the width determination rule determines the maximum available width of a label bar as the label width, and the arrangement mode is a dispersive arrangement mode.

The width determination rule is used to determine the label width. The width determination rule may be diverse. Three width determination rules are selected in the embodiment as examples for illustration, specifically as follows:

### 1. The label width is determined according to the width occupied by the label content:

Label content is configured to indicate the content of an application interface. The terminal needs to display all label contents of a label so that a user may know the application interface corresponding to the label. Under the circumstances, the terminal may determine the label width according to the width occupied by the label content.

The label width determined according to the width occupied by the label content may be corresponding to a plurality of arrangement modes, for example, a left-aligned arrangement mode, a right-aligned arrangement mode and a center-aligned arrangement mode.

### 2. A preset width is determined as the label width:

The terminal may preset a predetermined width and determine it as the label width. Without calculation, the width determination rule may not only save processing resource of the terminal, but also improve the speed of label creation.

A label width determined according to the preset width may be corresponding to a plurality of arrangement modes, for example, a left-aligned arrangement mode, a right-aligned arrangement mode and a center-aligned arrangement mode.

3. The maximum available width of a label bar is determined as a label width:

The maximum available width refers to a maximum width provided by the label bar to a label created. A label width determined according to the maximum available width of the label bar may be corresponding to a dispersive arrangement mode.

For example, a label width is determined as a width of a label bar if the label bar does not include a label which has been created; and the width of a label bar bisected is determined as a label width if the label bar includes two labels created. Fig.2B shows a schematic diagram of a first label bar, and Fig.2C shows a schematic diagram of a second label bar. The label bar 210 as shown in Fig.2B comprises a label 211 and a label 212, and the label bar 210 is bisected by the label 211 and the label 212 according to a dispersive arrangement mode, under the circumstances, label widths of both the label 211 and the label 212 are equal to a half of the width of the label bar; the label bar 210 in Fig.2C comprises a label 211, a label 212 and a label 214, and the label bar 210 is trisected by the label 211, the label 212 and the label 214 according to a dispersive arrangement mode, under the circumstances, label widths of the label 211, the label 212 and the label 214 are equal to one third of the width of the label bar. The label widths may therefore be determined as the width of the label bar divided by the number of labels being created.

If there are at least two width determination rules, developers may select one, which is unified with a visual theme style, from the at least two width determination rules. Similarly, if there are at least two arrangement modes, developers may select one, which is unified with a visual theme style, from the at least two arrangement modes. Thus, by providing different width determination rules and different arrangement modes, arbitrary combination of width determination rules and arrangement modes may be realized, thus reaching an effect of enriching a label style.

In Step 203, a label style as defined in the visual theme is determined according to label attribute information.

The terminal may read a width determination rule and an arrangement mode as defined in label attribute information, and determine a label width according to the width determination rule, thus determining the label style according to the label width and the arrangement mode.

When a width determination rule of the label attribute information is needed to be read from, the width determination rule is directly read if the label attribute information includes the width determination rule, or a width determination rule corresponding to an index is searched for in a preset corresponding relation if the label attribute information includes the index of the width determination rule, or a default width determination rule is acquired if label attribute information doesn't include a width determination rule. The terminal may read an arrangement mode in the label attribute information in a similar way.

Firstly, a label style as defined by the visual theme is determined according to label attribute information, comprising:
1) calculating a label width according to label content if according to the width determination rule the label width is determined according to the width occupied by the label content; and
2) determining the label style according to the label width and the arrangement mode.

If according to the width determination rule a label width is determined according to the width occupied by label content, the terminal may read the label content from a label creation request, calculate the label width according to the label content, and determine a label style according to the label width calculated and an arrangement mode.

Wherein, calculating the label width according to the label content comprises:
1) calculating a content width occupied by the label content;
2) determining the content width as the label width; or detecting whether the content width is greater than a preset minimum width and smaller than a preset maximum width, determining the content width as the label width if the content width is greater than the minimum width and smaller than the maximum width, and determining the minimum width or the maximum width as the label width if the content width is smaller than the minimum width or greater than the maximum width.

Label content may include at least one of characters or pictures. Thus, the terminal may respectively calculate the width of each character and each picture, and determine the label width according to the total width of all characters and pictures. Wherein, the method of calculating the width occupied by label content may be based on various mature methods, not elaborated herein.

After determining the content width occupied by label content, the terminal may directly determine the content width as the label width; or the terminal may set a minimum width and a maximum width of the label width, and determine the label width from a width range determined by the minimum width and the maximum width.

When in determining the label width from the width range determined by the minimum width and the maximum width according to the content width, the terminal may detect whether the content width is greater than the minimum width and smaller than the maximum width, determine the content width as the label width if the content width is greater than the minimum width and smaller than the maximum width, and determine such a length in the minimum width and the maximum width as proximal to the content width as the label width.

Wherein, the determining the minimum width or the maximum width as the label width comprises:
1) comparing the absolute value of a first difference value with the absolute value of a second difference value, the first difference being acquired by subtracting the content width from the minimum width, while the second difference being acquired by subtracting the content width from the maximum width;
2) determining the maximum width as the label width if the absolute value of the first difference value is greater than the absolute value of the second difference value; and
3) determining the minimum width as the label width if the absolute value of the first difference value is smaller than the absolute value of the second difference value.

The terminal may acquire the first difference by subtracting the content width from the minimum width, acquire the second difference by subtracting the content width from the maximum width, and compare the absolute value of the first difference value with the absolute value of the second difference value. The content width is determined to be closer to the maximum width which is determined as the label width if the absolute value of the first difference value is greater than the absolute value of the second difference value; and the content width is determined to be closer to the minimum width which is determined as the label width if the absolute value of the first difference value is smaller than the absolute value of the second difference value.

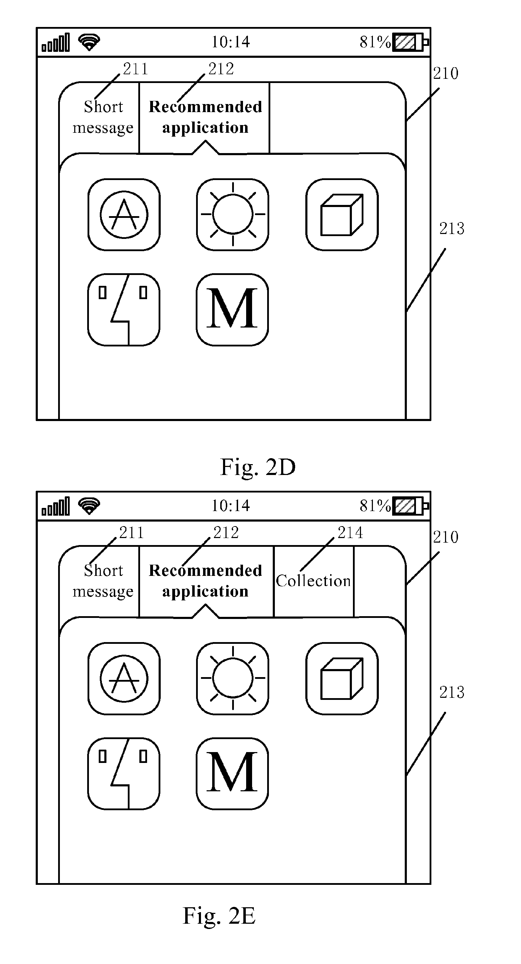

In conclusion, the label width is in positive correlation relationship with the width occupied by the label content. Please refer to the schematic diagram of the third label bar as shown in Fig.2D, the label content of the label 211 is "short message", while the label content of the label 212 is "recommended application". The word count of "recommended application" is more than that of "short message". Therefore, the width occupied by the label 212 is greater than that occupied by the label 211, i.e., the label width of the label 212 is greater than that of the label 211.

Secondly, a label style as defined in the visual theme is determined according to label attribute information, comprising:
1) determining a width acquired by equally dividing the length of a label bar comprising the label being created and at least a label in the label bar as the label width if according to the width determination rule the maximum available width of the label bar is determined as the label width; and
2) determining a label style according to the label width and an arrangement mode.

If according to the width determination rule a maximum available width of the label bar is determined as the label width, the terminal calculates the label width according to the quantity of labels comprised in the label bar and to the width of the label bar, and determines a label style according to the label width calculated and to an arrangement mode.

When in calculation of the label width, the terminal adds 1 to the quantity of labels comprised in the label bar, thus obtaining the total quantity of labels. The average label width is obtained by dividing the width of the label bar by the total quantity of labels, and a label style is determined according to the label width calculated and to an arrangement mode.

In Step 204, a label comprising label content is created in a label bar according to a label style.

The terminal creates a label in the label bar according to the label style determined and adds the label content carried in a label creation request into the label created. Wherein, the label created is directly added into a label bar for displaying if it does not influence other labels in the label bar. However, the other labels needs to be adjusted if the label created affects the other labels in the label bar.

For the convenience of understanding, in the embodiment, a label creation process is illustrated by taking such an example that a label 214 whose label content is "collection" is created in a label bar 210, and the label bar 210 also comprises a label 211 and another label 212. The label content of the label 211 is "short message", while the label content of the label 212 is "recommended application", specifically as follows:
1) In one kind of visual theme information of an application, an arrangement mode is a dispersive arrangement mode if the maximum available width of a label bar is determined as a label width according to a width determination rule as defined in label attribute information.

Please see the schematic diagram of the first label bar as shown in Fig.2B, a label bar 210 prior to creating a label 214 comprises a label 211 and another label 212, and the label bar 210 is bisected by the label 211 and the label 212.

Please see the schematic diagram of the second label bar as shown in Fig.2C, a label bar 210 after creating a label 214 comprises a label 211, a label 212 and a label 214, and the label bar 210 is trisected by the label 211, the label 212 and the label 214.
2) In another kind of visual theme information of an application, an arrangement mode is a left-aligned arrangement mode if according to a width determination rule as defined in label attribute information a label width is determined according to the width occupied by label content.

Please see the schematic diagram of the third label bar as shown in Fig.2D, a label bar 210 prior to creating a label 214 comprises a label 211 and another label 212. As the text content of the label 211 is less than that of the label 212, the label width of the label 211 is less than that of the label 212. Both the label 211 and the label 212 are arranged in the label bar 210 in a left-aligned arrangement mode.

Please see the schematic diagram of the fourth label bar as shown in Fig.2E, a label bar 210 after creating a label 214 comprises a label 211, a label 212 and a label 214. As the text content of the label 214 is equal to that of the label 211 and less than that of the label 212, the label width of the label 214 is equal to that of the label 211 and less than that of the label 212. The label 211, the label 212 and the label 214 are arranged in the label bar 210 in a left-aligned arrangement mode.

In conclusion, in the label creation method according to the present disclosure, by receiving a label creation request, which carries label content and an identification of a visual theme of an application, and the visual theme identification being an identification of the visual theme currently used in the application, reading label attribute information from visual theme information as indicated in the visual theme identification; determining a label style as defined in the visual theme according to the label attribute information, creating a label comprising the label content in a label bar according to the label style, it is possible to define different label styles according to different visual theme styles so as to unify label styles and visual theme styles. It is solved that a fixed label style is unadaptable to demands for change of a visual theme of an application thus leading to disunity between a label style and a visual theme style, thus having the effect of unifying label styles and visual theme styles.

In addition, the width determination rule is either one for determining a label width according to a width occupied by a label content or one for determining a preset width as the label width, and the arrangement mode is one of a left-aligned arrangement mode, a right-aligned arrangement mode and a center-aligned arrangement mode; or the width determination rule determines the maximum available width of a label bar as the label width, and the arrangement mode is a dispersive arrangement mode. By providing different width determination rules and different arrangement modes, arbitrary combination of width determination rules and arrangement modes may be realized, thus reaching an effect of enriching a label style.

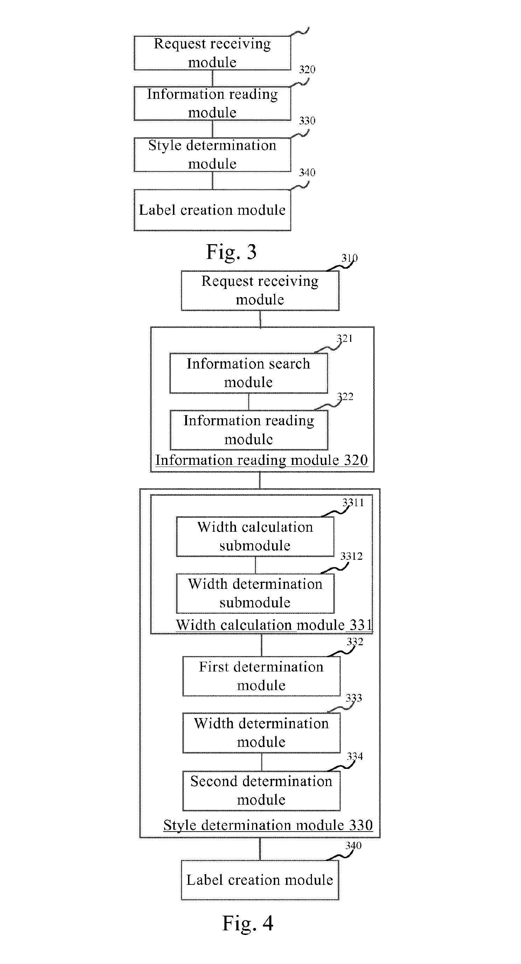

Fig. 3 is a block diagram showing a label creation device according to an exemplary embodiment. As shown in Fig.3, the label creation device is applied to a terminal, comprising: a request receiving module 310, an information reading module 320, a style determination module 330 and a label creation module 340.

The request receiving module 310 is configured to receive a label creation request, which carries label content and an identification of a visual theme of an application, and the visual theme identification is an identification of the visual theme currently used in the application.

The information reading module 320 is configured to read label attribute information from visual theme information as indicated in the visual theme identification;

The style determination module 330 is configured to determine a label style as defined in the visual theme according to the label attribute information read by the information reading module 320.

The label creation module 340 is configured to create a label comprising the label content in a label bar according to the label style determined by the style determination module 330.

In conclusion, the label creation device according to the present disclosure is characterized by: receiving a label creation request, which carries label content and an identification of a visual theme of an application, and the visual theme identification being an identification of the visual theme currently used in the application, reading label attribute information from visual theme information as indicated in the visual theme identification, determining a label style as defined in the visual theme according to the label attribute information, creating a label comprising the label content in a label bar according to the label style, thus making defining different label styles according to different visual theme styles so as to unify label styles and visual theme styles possible, solving the problem that a fixed label style is unadaptable to demands for change of a visual theme of an application thus leading to disunity between a label style and a visual theme style, and reaching the effect of unifying label styles and visual theme styles.

Fig. 4 is a block diagram showing a label creation device according to an exemplary embodiment. As shown in Fig.4, the label creation device is applied to a terminal, comprising: a request receiving module 310, an information reading module 320, a style determination module 330 and a label creation module 340.

The request receiving module 310 is configured to receive a label creation request, which carries label content and an identification of a visual theme of an application, and the visual theme identification is an identification of the visual theme currently used in the application;

The information reading module 320 is configured to read label attribute information from visual theme information as indicated in the visual theme identification.

The style determination module 330 is configured to determine a label style as defined in the visual theme according to the label attribute information read by the information reading module 320,

The label creation module 340 is configured to create a label comprising the label content in a label bar according to the label style determined by the style determination module 330.

Optionally, the information reading module 320 comprises an information search module 321 and an information reading module 322.

The information search module 321 is configured to search for visual theme information as indicated in the visual theme identification from at least one visual theme information prestored in the application.

The information reading module 322 is configured to read label attribute information from the visual theme information found by the information search module 321, the label attribute information comprises a rule for determining a width of the label and an arrangement mode of the label in the label bar.

Optionally, the width determination rule is either one for determining a label width according to a width occupied by a label content or one for determining a preset width as the label width, and the arrangement mode is one of a left-aligned arrangement mode, a right-aligned arrangement mode and a center-aligned arrangement mode; or

the width determination rule determines the maximum available width of a label bar as a label width, and the arrangement mode is a dispersive arrangement mode.

Optionally, the style determination module 330 comprises a width calculation module 331 and a first determination module 332.

The width calculation module 331 is configured to calculate the label width according to the label content if according to the width determination rule the label width is determined according to the width occupied by the label content.

The first determination module 332 is configured to determine a label style according to the label width calculated by the width calculation module 331 and to the arrangement mode.

Optionally, the width calculation module 331 comprises a width calculation submodule 3311 and a width determination submodule 3312.

The width calculation submodule 3311 is configured to calculate a content width occupied by the label content.

The width determination submodule 3312 is configured to: determine the content width calculated by the width calculation submodule 3311 as the label width; or detect whether the content width calculated by the width calculation submodule 3311 is greater than a preset minimum width and smaller than a preset maximum width, determine the content width as the label width if the content width is greater than the minimum width and smaller than the maximum width, and determine the minimum width or the maximum width as the label width if the content width is smaller than the minimum width or greater than the maximum width.

Optionally, the width determination submodule 3312 is configured to: compare the absolute value of a first difference value with the absolute value of a second difference value, the first difference is acquired by subtracting the content width from the minimum width, while the second difference is acquired by subtracting the content width from the maximum width; determine the maximum width as the label width if the absolute value of the first difference value is greater than the absolute value of the second difference value; and determine the minimum width as the label width if the absolute value of the first difference value is smaller than the absolute value of the second difference value.

Optionally, the style determination module 330 comprises a width determination module 333 and a second determination module 334.

The width determination module 333 is configured to determine a bisection width (acquired by bisecting the length of a label bar comprising the label being created and at least a label in the label bar) as the label width if according to the width determination rule the maximum available width of the label bar is determined as the label width.

The second determination module 334 is configured to determine a label style according to the label width determined by the width determination module 333 and to the arrangement mode.

In conclusion, the label creation device according to the present disclosure is characterized by receiving a label creation request, which carries label content and an identification of a visual theme of an application, and the visual theme identification being an identification of the visual theme currently used in the application; reading label attribute information from visual theme information as indicated in the visual theme identification, determining a label style as defined in the visual theme according to the label attribute information, creating a label comprising the label content in a label bar according to the label style, thus making defining different label styles according to different visual theme styles so as to unify label styles and visual theme styles possible, solving the problem that a fixed label style is unadaptable to demands for change of a visual theme of an application thus leading to disunity between a label style and a visual theme style; and reaching the effect of unifying label styles and visual theme styles.

In addition, the width determination rule is either one for determining a label width according to a width occupied by a label content or one for determining a preset width as the label width, and the arrangement mode is one of a left-aligned arrangement mode, a right-aligned arrangement mode and a center-aligned arrangement mode; or the width determination rule determines the maximum available width of a label bar as the label width, and the arrangement mode is a dispersive arrangement mode. By providing different width determination rules and different arrangement modes, arbitrary combination of width determination rules and arrangement modes may be realized, thus reaching an effect of enriching a label style.

With regard to the device in the above embodiment, detailed description of specific modes for conducting operation of modules has been made in the embodiment related to the method, no detailed illustration will be made herein.

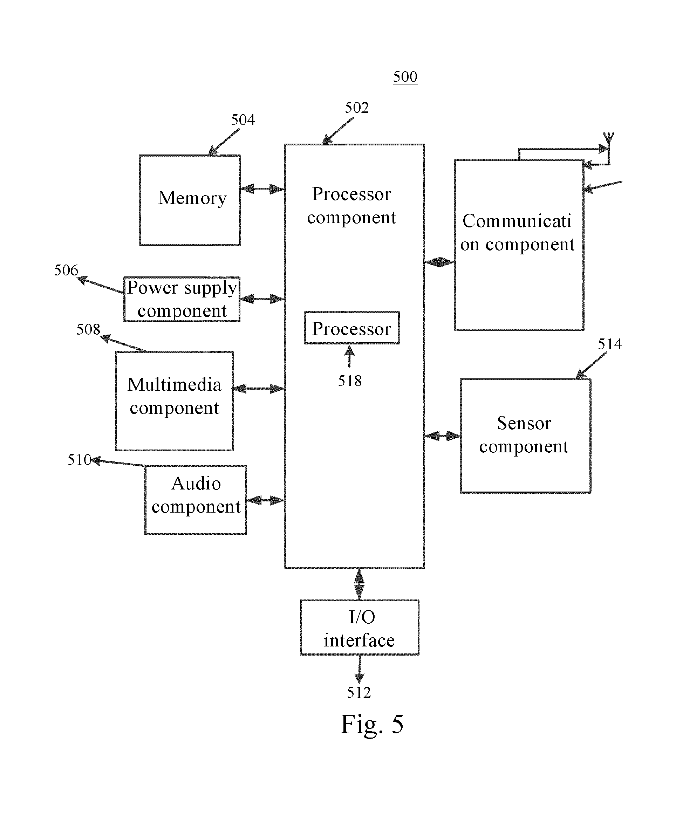

Fig. 5 is a block diagram for a label creation device 500 according to an exemplary embodiment. For example, the device 500 may be a mobile telephone, a computer, a digital broadcasting terminal, a message transceiver device, a games console, a tablet device, a medical device, a fitness facility, a PDA (personal digital assistant) and the like.

Referring to Fig.5, the device 500 may include one or a plurality of components as below: a processor component 502, a memory 504, a power supply component 506, a multimedia component 508, an audio component 510, an input/output (I/O) interface 512, a sensor component 514 and a communication component 516.

The processor component 502 usually controls the overall operation of the device 500, for example, display, telephone call, data communication, and operation associated with camera operation and record operation. The processor component 502 may include one or a plurality of processors 518 for executing instructions so as to complete steps of above method in part or in whole. In addition, the processor component 502 may include one or a plurality of modules for the convenience of interaction between the processor component 502 and other components. For example, the processor component 502 may include a multimedia module for the convenience of interaction between the multimedia component 508 and the processor component 502.

The memory 504 is configured to store data of different types so as to support the operation of the device 500. Examples of the data include any application program or approach directive for operation of the device 500, including contact data, phonebook data, message, picture and video, etc. The memory 504 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 506 provides power for components of the device 500. The power supply component 506 may include a power management system, one or a plurality of power supplies, and other components associated with generation, management and power distribution of the device 500.

The multimedia component 508 includes a screen between the device 500 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 508 includes a front-facing camera and/or a rear-facing camera. When the device 500 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 510 is configured to output and/or input audio signal. For example, the audio component 510 includes a microphone (MIC); when the device 500 is under an operation mode such as call mode, record mode and speech recognition mode, the microphone is configured to receive external audio signal. The audio signal received may be further stored in the memory 504 or sent out by the communication component 516. In some embodiments, the audio component 510 also includes a loudspeaker for outputting audio signal.

The I/O interface 512 provides interface for the processor component 502 and peripheral interface modules, the peripheral interface modules may be a keyboard, a click wheel and buttons, etc. These buttons may include but not limited to: home button, volume button, start button and locking button.

The sensor component 514 includes one or a plurality of sensors for providing the device 500 with state evaluation from all aspects. For example, the sensor component 514 may detect the on/off state of the device 500, relative positioning of components, for example, the components are the displayer and keypads of the device 500; the sensor component 514 also may detect the position change of the device 500 or a component thereof, the presence or absence of users' touch on the device 500, the direction or acceleration/deceleration of the device 500, and temperature variation of the device 500. The sensor component 514 may also include a proximity detector, which is configured to detect the presence of nearby objects in case of no physical touch. The sensor component 514 may also include an optical sensor, for example, CMOS or CCD image sensor for imaging. In some embodiments, the sensor component 514 may also include an acceleration sensor, a gyro sensor, a magnetic sensor, a pressure sensor, or a temperature sensor.

The communication component 516 is configured to facilitate wired communication or wireless communication between the device 500 and other equipment. The device 500 is available for access to wireless network based on communication standards, for example, WiFi, 2G or 3G, or combination thereof. In an exemplary embodiment, the communication component 516 receives by means of a broadcast channel the broadcast signal or broadcast-related information from external broadcast management systems. In an exemplary embodiment, the communication component 516 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 500 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 504 including instructions, above instructions may be executed by the processors 518 of the device 500 so as to achieve the above methods. For example, the non-transitory computer-readable storage medium may be ROM, random access memory (RAM), CD-ROM, magnetic tape, floppy disk and optical data storage device, etc.

The term "terminal" used herein may refer to a mobile telephone, a computer, a digital broadcasting terminal, a message transceiver device, a games console, a tablet device, a medical device, a fitness facility, a PDA (personal digital assistant) and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with the invention being defined by the following claims.

It will be appreciated that the present invention is not limited to the exact construction that has been described above and illustrated in the accompanying drawings.

## Claims

1. A label creation method for creating labels within an application, the method **characterized in** comprising:
receiving (101) a label creation request, which carries label content and a visual theme identification of an application, the visual theme identification being an identification of a visual theme currently used in the application to specify the visual appearance of the application user interface;
reading (102) label attribute information from visual theme information as indicated in the visual theme identification;
determining (103) a label style as defined in the visual theme according to the label attribute information; and
creating (104) a label comprising the label content in a label bar according to the label style.

2. The method according to claim 1, wherein the reading label attribute information from visual theme information as indicated in the visual theme identification comprises:
searching for visual theme information as indicated in the visual theme identification from at least one visual theme information pre-stored in the application; and
reading the label attribute information from the searched visual theme information, the label attribute information comprising a rule for determining a width of the label and an arrangement mode of the label in the label bar.

3. The method according to claim 2, wherein:
the width determination rule is either one of determining a label width according to a width occupied by a label content or determining a preset width as a label width, and the arrangement mode is one of a left-aligned arrangement mode, a right-aligned arrangement mode and a center-aligned arrangement mode; or
the width determination rule is determining a maximum available width of a label bar as a label width, and the arrangement mode is a dispersive arrangement mode.

4. The method according to claim 3, wherein the determining a label style as defined in the visual theme according to the label attribute information comprises:
if according to the width determination rule a label width is determined according to a width occupied by a label content, calculating the label width according to the label content; and
determining the label style according to the label width and the arrangement mode.

5. The method according to claim 4, wherein the calculating the label width according to the label content comprises:
calculating a content width occupied by the label content;
determining the content width as the label width; or detecting whether the content width is greater than a preset minimum width and smaller than a preset maximum width, determining the content width as the label width if the content width is greater than the minimum width and smaller than the maximum width, and determining the minimum width or the maximum width as the label width if the content width is smaller than the minimum width or greater than the maximum width.

6. The method according to claim 5, wherein the determining the minimum width or the maximum width as the label width comprises:
comparing an absolute value of a first difference value with an absolute value of a second difference value, the first difference being acquired by subtracting the content width from the minimum width, while the second difference being acquired by subtracting the content width from the maximum width;
determining the maximum width as the label width if the absolute value of the first difference value is greater than the absolute value of the second difference value; and
determining the minimum width as the label width if the absolute value of the first difference value is smaller than the absolute value of the second difference value.

7. The method according to claim 3, wherein the determining a label style as defined in the visual theme according to the label attribute information comprises:
if according to the width determination rule a maximum available width of a label bar is determined as a label width, determining a width acquired by equally dividing a length of the label bar comprising the label being created and at least a label in the label bar as the label width and
determining the label style according to the label width and the arrangement mode.

8. A device for creating labels within an application, the device **characterized in** comprising:
a request receiving module (310), configured to receive a label creation request, which carries label content and a visual theme identification of an application, and the visual theme identification being an identification of a visual theme currently used in the application to specify the visual appearance of the application user interface;
an information reading module (320), configured to read label attribute information from visual theme information as indicated in the visual theme identification;
a style determination module (330), configured to determine a label style as defined in the visual theme according to the label attribute information read by the information reading module; and
a label creation module (340), configured to create a label comprising the label content in a label bar according to the label style determined by the style determination module.

9. The device according to claim 8, wherein the information reading module comprises:
an information searching module, configured to search for visual theme information as indicated in the visual theme identification from at least one visual theme information pre-stored in the application; and
an information reading module, configured to read the label attribute information from the visual theme information found by the information search module, the label attribute information comprising a rule for determining a width of the label and an arrangement mode of the label in the label bar.

10. The device according to claim 9, wherein:
the width determination rule is either one of determining a label width according to a width occupied by a label content or determining a preset width as a label width, and the arrangement mode is one of a left-aligned arrangement mode, a right-aligned arrangement mode and a center-aligned arrangement mode; or
the width determination rule is determining a maximum available width of a label bar as a label width, and the arrangement mode is a dispersive arrangement mode.

11. The device according to claim 10, wherein the style determination module comprises:
a width calculation module, configured to, if according to the width determination rule a label width is determined according to a width occupied by a label content, calculate the label width according to the label content; and
a first determination module, configured to determine the label style according to the label width calculated by the width calculation module and to the arrangement mode.

12. The device according to claim 11, wherein the width calculation module comprises:
a width calculation sub-module, configured to calculate a content width occupied by the label content; and
a width determination sub-module, configured to: determine the content width calculated by the width calculation sub-module as the label width; or detect whether the content width calculated by the width calculation sub-module is greater than a preset minimum width and smaller than a preset maximum width, determine the content width as the label width if the content width is greater than the minimum width and smaller than the maximum width, and determine the minimum width or the maximum width as the label width if the content width is smaller than the minimum width or greater than the maximum width; and
wherein the width determination sub-module is configured to: compare an absolute value of a first difference value with an absolute value of a second difference value, the first difference being acquired by subtracting the content width from the minimum width, while the second difference being acquired by subtracting the content width from the maximum width; determine the maximum width as the label width if the absolute value of the first difference value is greater than the absolute value of the second difference value; and determine the minimum width as the label width if the absolute value of the first difference value is smaller than the absolute value of the second difference value.

13. The device according to claim 10, wherein the style determination module comprises:
a width determination module, configured to determine a width acquired by equally dividing a length of the label bar comprising the label being created and at least a label in the label bar as the label width if according to the width determination rule a maximum available width of a label bar is determined as a label width; and
a second determination module, configured to determine the label style according to the label width determined by the width determination module and to the arrangement mode.

14. A terminal, comprising:
a processor;
a memory configured to store executable instructions from the processor;
wherein, the terminal is **characterized in that** the processor is configured to performvisual themevisual themevisual themevisual themevisual themevisual theme the method of any of claims 1 to 7.

15. A computer program product stored on a computer usable medium, comprising computer-readable program means that when executed cause a mobile terminal to implement the method according to any one of claims 1 to 7.
